# EUROPÄISCHE PATENTANMELDUNG

(11) **EP 4 678 997 A1**
(43) Veröffentlichungstag der Anmeldung: **14.01.2026**
(21) Anmeldenummer: 25188186.8
(22) Anmeldetag: 08.07.2025
(51) Int. Cl.: F24S 23/74, F24S 30/455

(54) **VORRICHTUNG UND VERFAHREN ZUM SAMMELN UND TRANSPORTIEREN VON SOLARENERGIE**

(30) Priorität: 08.07.2024 DE 102024002212
(71) Anmelder: Kostka, Peter, 63808 Haibach (DE)
(72) Erfinder: Kostka, Peter, 63808 Haibach (DE)
(74) Vertreter: Nitz, Astrid

(57) **Zusammenfassung**

Vorrichtung (1) zum Sammeln und Transportieren von Solarenergie, umfassend eine um eine Längsrichtung (2) parabelförmig gebogene Spiegelfläche (3) für Solarstrahlung, die eine Fokussierung auf eine Brennlinie (4) ermöglicht, wobei im Wesentlichen im Bereich der Brennlinie (4) ein Leitungsmittel (5) angeordnet ist, durch das eine energiespeichernde Flüssigkeit (6) führbar ist, insbesondere umfassend eine Spiegelrinne um das Leitungsmittel (5), wobei die gebogene Spiegelfläche (3) zumindest teilweise, insbesondere überwiegend horizontal zur Nachfolge der Solarstrahlung um eine Drehachse (7), insbesondere um bis zu etwa 180 °, drehbar ist, die im Wesentlichen parallel zur Brennlinie (4) verlaufend eingerichtet ist, wobei die Brennlinie (4) mit dem aufnehmenden Leitungsmittel eine zumindest teilweise, insbesondere überwiegende Komponente in einer Vertikalen (8) aufweist.

## Beschreibung

Die Erfindung betrifft eine Vorrichtung zum Sammeln und Transportieren von Solarenergie nach dem Oberbegriff von Anspruch 1 und ein Verfahren zum Sammeln und Transportieren von Solarenergie nach dem Oberbegriff von Anspruch 9.

Bekannte Solarspiegeleinrichtungen sind groß und sperrig, so dass sie für die Verwendung in Einfamilienhäusern oder kleineren Siedlungen schlecht geeignet sind. Weiterhin erfordern sie eine umfassende Wartung.

Aufgabe der vorliegenden Erfindung ist die Bereitstellung einer einfachen und sicheren Vorrichtung zum Sammeln und Transportieren von Solarenergie unter Vermeidung der Nachteile des Stands der Technik.

Die Aufgabe wird gelöst durch eine Vorrichtung zum Sammeln und Transportieren von Solarenergie, umfassend eine um eine Längsrichtung parabelförmig gebogene Spiegelfläche für Solarstrahlung, die eine Fokussierung auf eine Brennlinie ermöglicht, wobei im Wesentlichen im Bereich der Brennlinie ein Leitungsmittel angeordnet ist, durch das eine energiespeichernde Flüssigkeit führbar ist, insbesondere umfassend eine Spiegelrinne um das Leitungsmittel, wobei die gebogene Spiegelfläche zumindest teilweise, insbesondere überwiegend horizontal zur Nachfolge der Solarstrahlung um eine Drehachse, insbesondere um bis zu etwa 180 ° , drehbar ist, die im Wesentlichen parallel zur Brennlinie verlaufend eingerichtet ist, wobei die Brennlinie mit dem aufnehmenden Leitungsmittel eine zumindest teilweise, insbesondere überwiegende Komponente in einer Vertikalen aufweist.

Vorteilhaft ist es, wenn die Brennlinie zusammen mit der gebogenen Spiegelfläche um eine im Wesentlichen horizontale Kippachse zur Nachfolge der Solarstrahlung im Wesentlichen vertikal kippbar ist, wobei die vertikale Kippung der gebogenen Spiegelfläche in einem Winkelbereich von etwa 0° bis etwa 90° gegenüber der Vertikalen vornehmbar ist.

Die Erfindung offenbart eine Solarspiegeleinrichtung mit einem Fokussierungsbereich für die auftreffenden Sonnenstrahlen in einem parabelförmig gebogenem Aufbau. Durch den nachführbaren Spiegel in Parabelform mit Brennlinie in im Wesentlichen senkrechter Einrichtung eine große Solarausbeute auf kleiner Fläche möglich ist. Die horizontale Längsachsenschwenkung der Spiegelfläche sowie die Nachführung um die Brennlinie in Längsachsenkippung insbesondere eines stabilen, jedoch vergleichsweise kompakten Tragerahmens bewirkt eine sichere Anordnung der Vorrichtung auch bei ungünstigen Wetterbedingungen. Das flüssige Wärmespeichermedium wird durch eine Anordnung an einem Ende des Haltegestells sehr wenig gedreht/bewegt, wodurch wenig Wartungsarbeiten notwendig sind.

Wärmeleitendes, energiespeichernde Flüssigkeit kann unterschiedlich sein, vorzugsweise umweltverträglich handhabbar, insbesondere Wasser, Glykol, Öl und/oder Mischungen daraus.

Vorteilhaft ist es, wenn die gebogene Spiegelfläche durch ein Haltegestell zu halten ist, das an der horizontalen Kippachse kippbar ist, wobei insbesondere ein Bewegungsmotor zur Betätigung der Kippung vorgesehen ist und/oder ein Scherenexpansionssystem, insbesondere angetrieben durch den Bewegungsmotor und/oder eine Führung der gebogenen Spiegelfläche mittels einer/mehrerer Linearführung/en entlang des Haltegestells, an die die Spiegelfläche angelenkt ist, und/oder ein Bewegungsmotor zur Drehung angeordnet, insbesondere im Bereich des Leitungsmittels, vorgesehen ist und/oder ein Rad, insbesondere ein Kettenrad, zugeordnet zu dem Spiegelfläche vorgesehen ist mit einem Kettenantrieb angetrieben durch einen Bewegungsmotor angeordnet in einem Haltebereich des Haltegestells zugeordnet zu der Spiegelfläche. Durch eine Linearführung kann eine sehr stabile Führung ohne Platzaufwand erhalten werden. Das Rad mit Kette ermöglicht eine auch kleinschrittige Verstellung und kann sicher gehalten werden.

Vorteilhaft ist es, wenn entlang des Leitungsmittels im Bereich der Brennlinie eine Hinführungsleitung und eine Rückführungsleitung für die energiespeichernde Flüssigkeit im Anschluss an Anschlussleitungen für die energiespeichernde Flüssigkeit, insbesondere gekoppelt an einen Wärmespeicher, eingerichtet ist, wobei insbesondere eine Ankopplung der Hinführungsleitung und Rückführungsleitung an die Anschlussleitung an dem Endbereich der Brennlinie vorgesehen ist, der benachbart zur Kippachse eingerichtet ist, insbesondere an einem oberen Endbereich des Haltegestells.

Vorteilhaft ist es, wenn an dem Haltegestell an einem oberen Endbereich und einem unteren Endbereich Drehlagermittel für die Drehung der gebogenen Spiegelfläche relativ zu dem mittig gehaltenen Leitungsmittel und der Brennlinie vorgesehen sind.

Vorteilhaft ist es, wenn die Drehlagermittel teilbar ausgebildet sind, insbesondere mit abnehmbaren Haltemitteln, wodurch der Zusammenhalt der Drehlagermittel ermöglicht ist. Durch die Aufhängung mittels Drehlagermitteln ist einerseits eine sichere Drehung des Spiegels möglich und andererseits eine Entnahme und einfache Wartung einer Vakuumglaseinrichtung, die entfernbar/austauschbar ist.

Vorteilhaft ist es, wenn die Hinführungsleitung und die Rückführungsleitung im Bereich der Brennlinie in einer Vakuumglaseinrichtung, die insbesondere mit lokalen Spiegelmitteln und/oder Wärmeaufnahmeschichten ausgestattet ist.

Vorteilhaft ist es, wenn zur Ankopplung der Hinführungsleitung und die Rückführungsleitung in einer Vakuumglaseinrichtung an dem oberen Endbereich Flansche vorgesehen sind und/oder eine bei einer wärmeleitende Trockenankopplung einer Vakuumglaseinrichtung eine Steckverbindung und/oder eine Abdeckung zum Schutz der Spiegelfläche vorgesehen ist, insbesondere derart angeordnet, dass die Abdeckung zur Sicherung in einer eingefahrenen Position der Spiegelfläche gegeben. Die Vakuumglaseinrichtung und/oder die Hinführungsleitung und die Rückführungsleitung können beispielsweise durch die teilbaren Drehlagermittel gewartet werden oder im Falle einer Trockenankopplung auch direkt ohne Öffnung der Drehlagermittel gewartet/getauscht werden.

Die Aufgabe wird ebenfalls gelöst durch ein Verfahren zum Sammeln und Transportieren von Solarenergie unter Verwendung einer Vorrichtung zum Sammeln und Transportieren von Solarenergie wobei durch eine um eine Längsrichtung parabelförmig gebogene Spiegelfläche Solarstrahlung auf eine Brennlinie fokussiert wird, wobei im Wesentlichen im Bereich der Brennlinie ein Leitungsmittel angeordnet wird, durch das eine energiespeichernde Flüssigkeit geführt wird, insbesondere umfassend eine Spiegelrinne um das Leitungsmittel, wobei die gebogene Spiegelfläche zumindest teilweise, insbesondere überwiegend horizontal zur Nachfolge der Solarstrahlung um eine Drehachse, insbesondere um bis zu etwa 180 °, gedreht wird, die im Wesentlichen parallel zur Brennlinie verläuft, wobei die Brennlinie mit dem aufnehmenden Leitungsmittel eine zumindest teilweise, insbesondere überwiegende Komponente übereinstimmend mit einer Vertikalen aufweist, wobei die Brennlinie zusammen mit der gebogenen Spiegelfläche um eine im Wesentlichen horizontale Kippachse zur Nachfolge der Solarstrahlung im Wesentlichen vertikal gekippt wird, wobei eine vertikale Kippung der gebogenen Spiegelfläche in einem Winkelbereich von etwa 0° bis etwa 90° gegenüber der Vertikalen erfolgt.

Vorteilhaft ist es, wenn zur Steuerung von Bewegungsmotoren für Bewegungen der gebogenen Spiegelfläche insbesondere Microcomputer verwendet werden, insbesondere für eine automatische Solarnachführung, insbesondere unter Verwendung von Wetterberichten und/oder Umweltdaten, insbesondere mit einer Notsteuerung bei Unwetter, insbesondere Hagel und/oder Regen und/oder Schnee, wobei eine Herausdrehung der Spiegelfläche aus dem Wettergeschehen erfolgt, insbesondere zur Drehung der Spiegelfläche aus einem Wettergeschehen heraus, insbesondere zum Erdboden hin.

Die Wettergeschehnisse können auch mittels eines oder mehrere Sensoren, insbesondere Feuchtigkeitssensor und/oder Wärmesensor und/oder Lichtsensor, festgestellt werden, der an die Steuerung angekoppelt wird.

Es ist weiterhin eine mehrfache Anbindung mit verschiedenen Schnittstellen möglich, Homematic, KNX-Standard als Feldbus zur Gebäudeautomation, KI-gesteuerte Regelung, Rest-API, Web - API, Modbus-Schnittstelle / RS 485 Schnittstelle, Datenaustausch, potentialfreie Schaltkontakte für Heizungen.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine erfindungsgemäße Vorrichtung in perspektivischer Ansicht,
- Fig. 2: eine erfindungsgemäße Vorrichtung in schematischer Seitenansicht,
- Fig. 3: eine Ausschnitt einer erfindungsgemäßen Vorrichtung,
- Fig. 4: ein Ausschnitt einer erfindungsgemäßen Vorrichtung,
- Fig. 5a: eine erfindungsgemäße Vorrichtung,
- Fig. 5b: eine erfindungsgemäße Vorrichtung,
- Fig. 5c: eine erfindungsgemäße Vorrichtung,
- Fig. 6a: eine erfindungsgemäße Vorrichtung,
- Fig. 6b: eine erfindungsgemäße Vorrichtung und
- Fig. 7: eine erfindungsgemäße Vorrichtung.

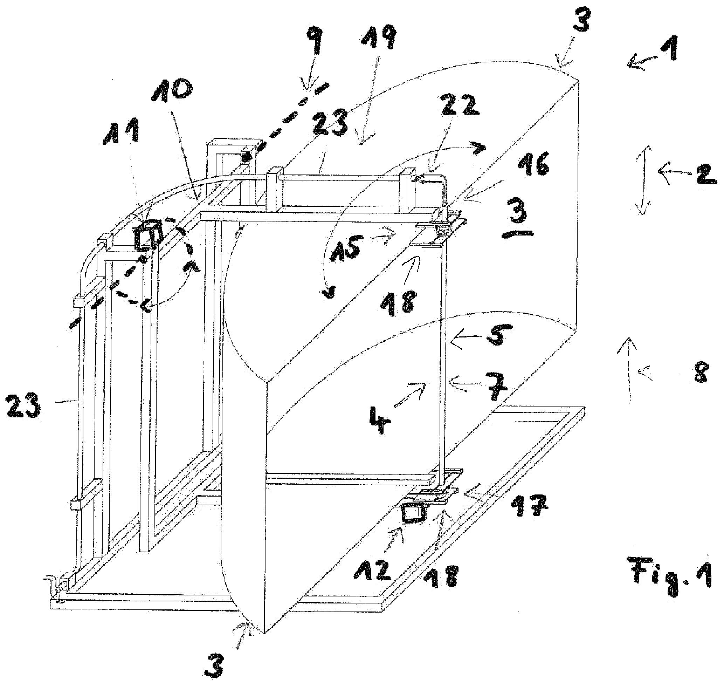

Fig. 1 zeigt in perspektivischer Ansicht eine erfindungsgemäße Vorrichtung zum Sammeln und Transportieren von Solarenergie, umfassend eine um eine Längsrichtung 2 parabelförmig gebogene Spiegelfläche 3 für Solarstrahlung, die eine Fokussierung auf eine Brennlinie 4 ermöglicht, wobei ein Leitungsmittel 5 im Wesentlichen im Bereich der Brennlinie 4 angeordnet ist, durch das eine energiespeichernde Flüssigkeit 6 führbar ist, insbesondere umfassend eine nicht dargestellte Spiegelrinne um das Leitungsmittel 5, wobei die gebogene Spiegelfläche 3 zumindest teilweise, insbesondere überwiegend horizontal zur Nachfolge der Solarstrahlung um eine Drehachse 7, insbesondere um bis zu etwa 180 °, drehbar ist, die im Wesentlichen parallel zur Brennlinie 4, vorzugsweise übereinstimmend mit der Brennlinie verlaufend eingerichtet ist, wobei die Brennlinie 4 mit dem aufnehmenden Leitungsmittel 5 eine zumindest teilweise, insbesondere überwiegende Komponente in einer Vertikalen 8 aufweist. Die Brennlinie 4 ist zusammen mit der gebogenen Spiegelfläche 3 um eine im Wesentlichen horizontale Kippachse 9 zur Nachfolge der Solarstrahlung im Wesentlichen vertikal kippbar ist, wobei die vertikale Kippung der gebogenen Spiegelfläche 3 in einem Winkelbereich 10 von etwa 0° bis etwa 90° gegenüber der Vertikalen 8 vornehmbar ist. Die gebogene Spiegelfläche 3 ist durch ein Haltegestell 10 zu halten, das an der horizontalen Kippachse 9 kippbar ist, wobei insbesondere ein beispielhafter schematischer Bewegungsmotor 11 zur Betätigung der Kippung vorgesehen ist und/oder ein beispielhafter schematischer Bewegungsmotor 12 zur Drehung angeordnet insbesondere im Bereich des Leitungsmittels 5 vorgesehen ist.

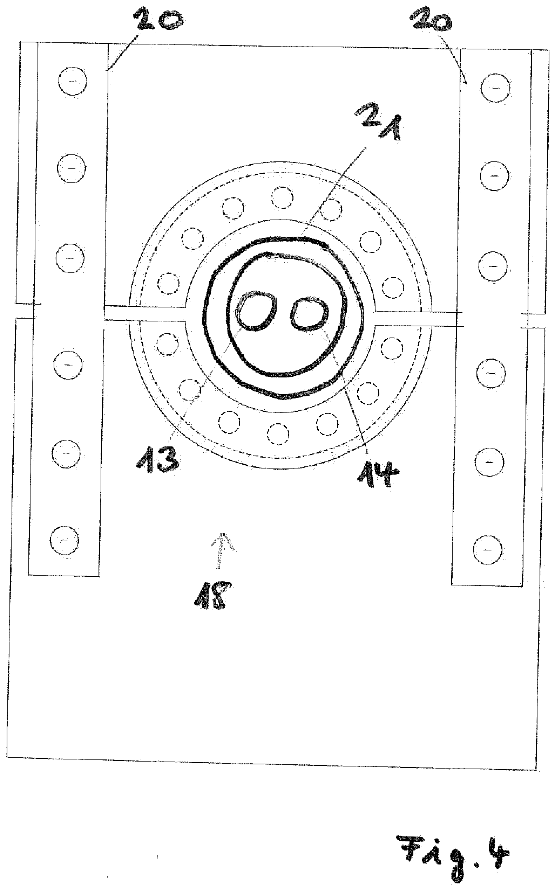

Entlang des Leitungsmittels 5 im Bereich der Brennlinie 4 ist eine Hinführungsleitung 13 und eine Rückführungsleitung 14 vorgesehen für die energiespeichernde Flüssigkeit 6 im Anschluss an Anschlussleitungen 23 für die energiespeichernde Flüssigkeit 6, insbesondere gekoppelt an einen nicht dargestellten Wärmespeicher, wobei insbesondere eine Ankopplung der Hinführungsleitung 13 und Rückführungsleitung 14 an die Anschlussleitung 23 an dem Endbereich 15 der Brennlinie 4 vorgesehen ist, der benachbart zur Kippachse 9 eingerichtet ist, insbesondere an einem oberen Endbereich 19 des Haltegestells 10, wobei an dem Haltegestell 10 an einem oberen Endbereich 16 und einem unteren Endbereich 17 Drehlagermittel 18 für die Drehung der gebogenen Spiegelfläche 3 relativ zu dem mittig gehaltenen Leitungsmittel 5 und der Brennlinie 4 vorgesehen sind, wobei in Fig. 4 eine vergrößerte Darstellung eines Drehlagermittels 18 dargestellt ist.

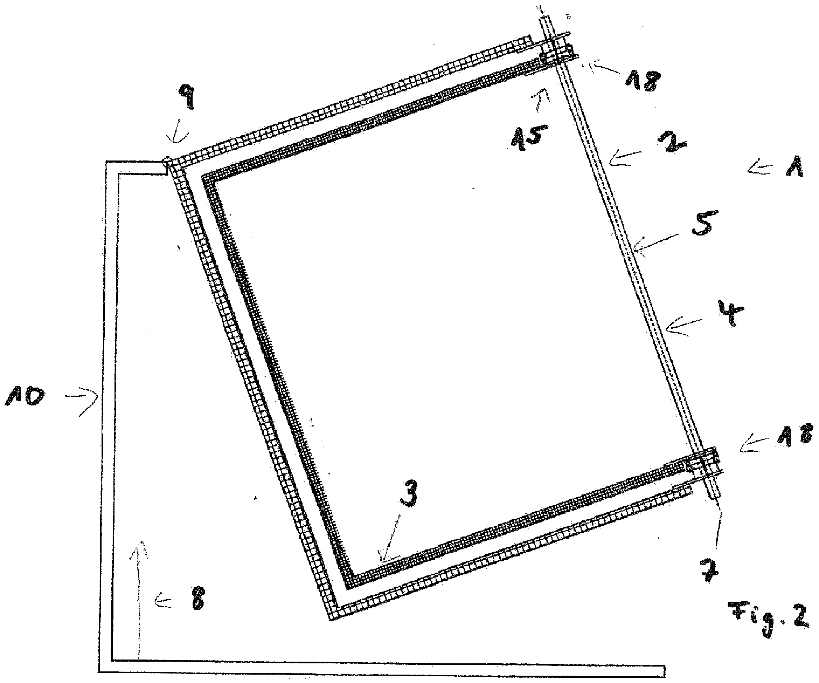

Fig. 2 zeigt eine erfindungsgemäße Vorrichtung 1 in schematischer Seitenansicht, wobei eine schematische Kipping um eine Kippachse 9 dargestellt ist.

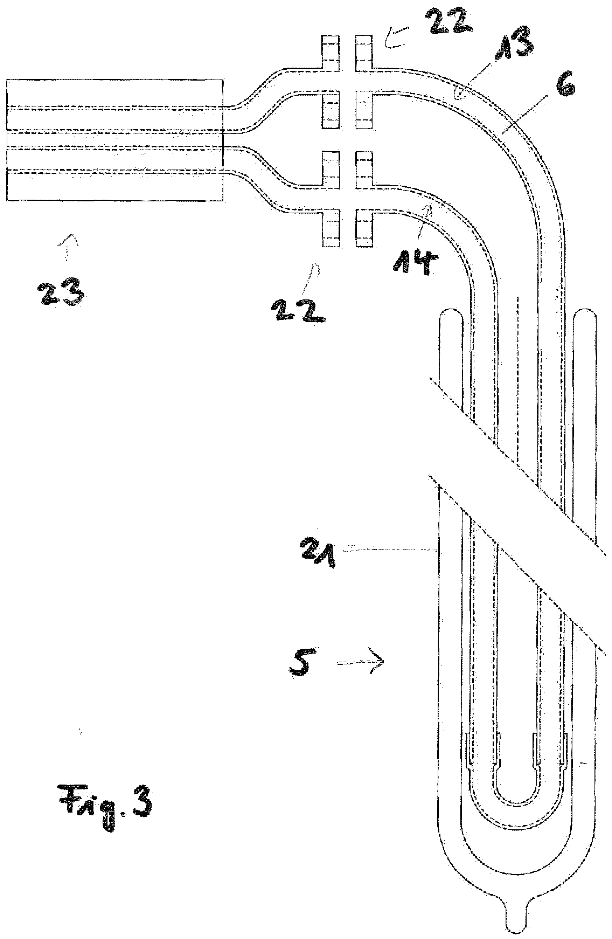

Fig. 3 zeigt einen Ausschnitt einer erfindungsgemäßen Vorrichtung die Hinführungsleitung 13 und die Rückführungsleitung 14 im Bereich der Brennlinie 4 in einer Vakuumglaseinrichtung 21, die insbesondere mit lokalen Spiegelmitteln und/oder Wärmeaufnahmeschichten ausgestattet ist.

Fig. 4 zeigt ein Ausschnitt einer erfindungsgemäßen Vorrichtung mit einem Drehlagermittel 18, das teilbar ausgebildet, insbesondere mit abnehmbaren Haltemitteln 20, wodurch der Zusammenhalt der Drehlagermittel 18 ermöglicht ist.

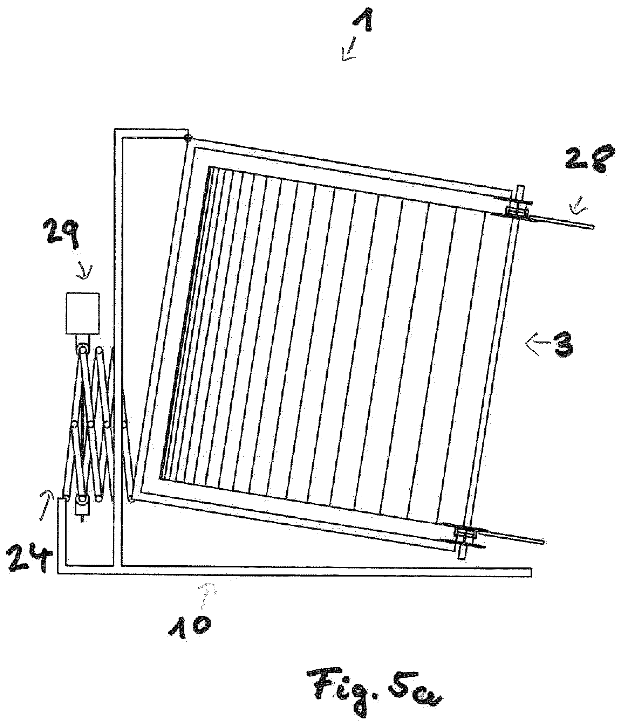

Fig. 5a zeigt eine erfindungsgemäße Vorrichtung 1 mit einem Scherenexpansionssystem 24 zur Verstellung der Spiegelfläche 3 in eingefahrenem Zustand.

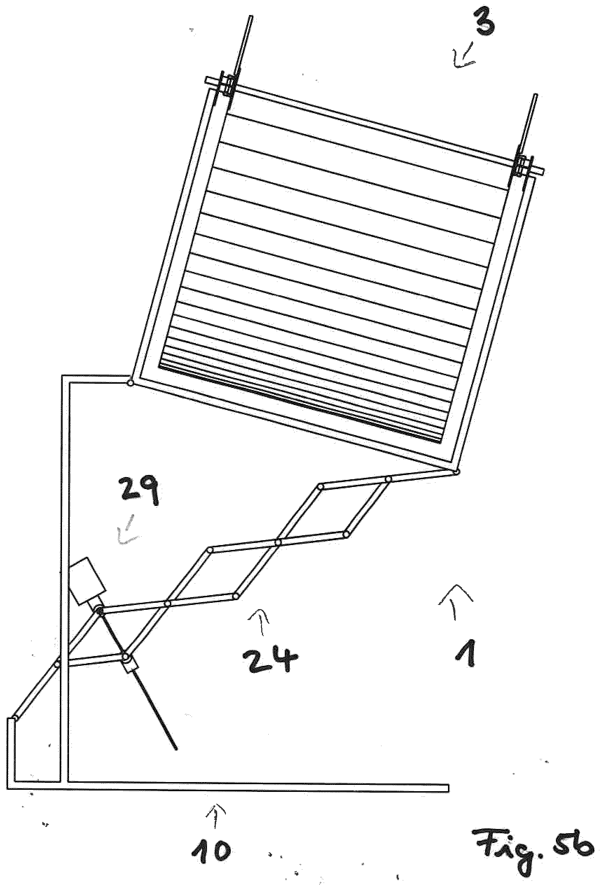

Fig. 5b zeigt eine erfindungsgemäße Vorrichtung 1 mit einem Scherenexpansionssystem 24 in ausgefahrenem Zustand der Spiegelfläche 3.

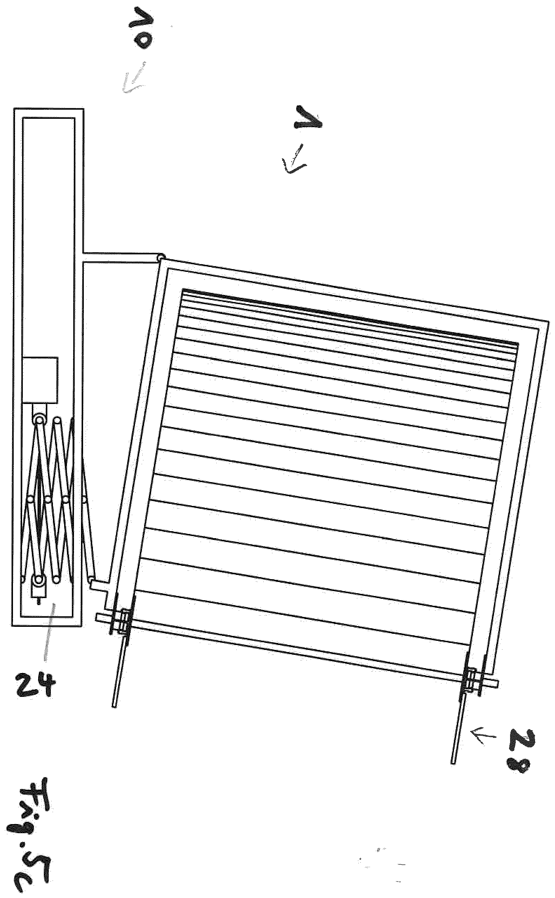

Fig. 5c eine weitere Variante einer erfindungsgemäßen Vorrichtung 1 mit einem Scherenexpansionssystem 24 mit einem Drehpunkt in Bodennähe.

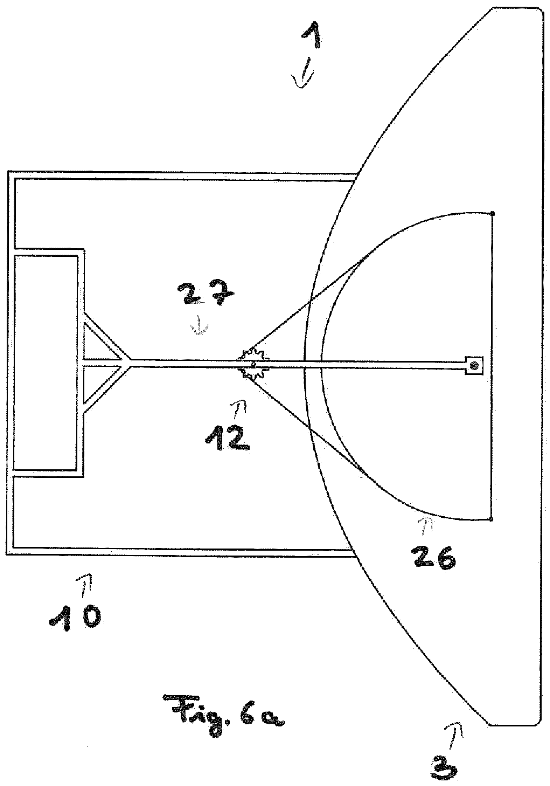

Fig. 6a zeigt eine erfindungsgemäße Vorrichtung 1 mit einem Rad 26 und einer Kette zum Antrieb der Spiegelflächendrehung.

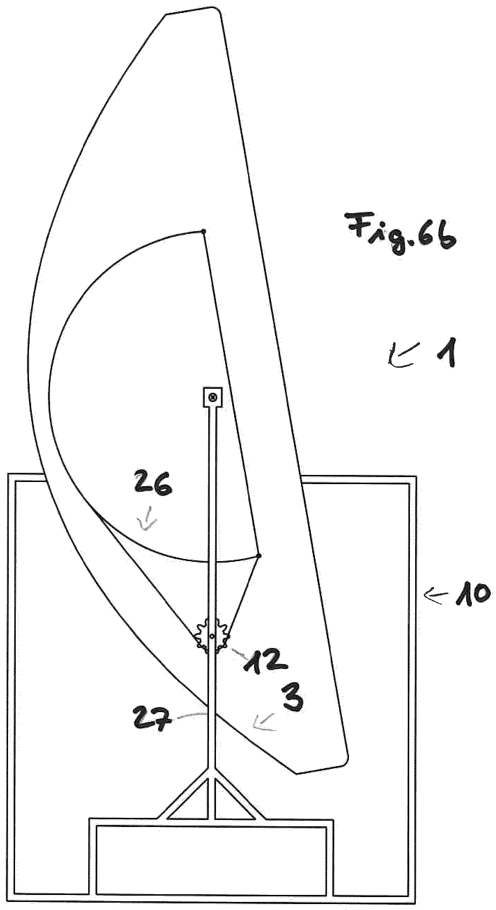

Fig. 6b zeigt eine erfindungsgemäße Vorrichtung 1 mit einem Rad 26 und einer Kette zum Antrieb der Spiegelflächendrehung.

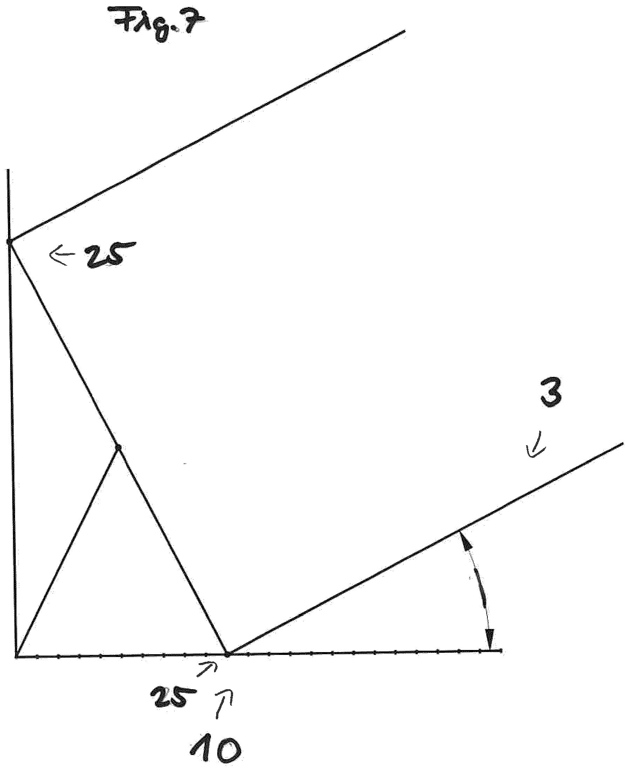

Fig. 7 zeigt eine erfindungsgemäße Vorrichtung mit einer Linearführung 25 zur Kippung der Spiegelfläche 3.

### BEZUGSZEICHENLISTE

1 Vorrichtung zum Sammeln und Transportieren von Solarenergie
2 Längsrichtung
3 Spiegelfläche
4 Brennlinie
5 Leitungsmittel
6 Flüssigkeit
7 Drehachse
8 Vertikale
9 Kippachse
10 Haltegestell
11 Bewegungsmotor
12 Bewegungsmotor
13 Hinführungsleitung
14 Rückführungsleitung
15 Endbereich
16 Oberen Endbereich
17 Unterer Endbereich
18 Drehlagermittel
19 Oberer Bereich
20 Haltemittel
21 Vakuumglaseinrichtung
22 Flansch
23 Anschlussleitung
24 Scherenexpansionssystem
25 Linearführung
26 Rad
27 Haltebereich
28 Abdeckung
29 Bewegungsmotor

## Patentansprüche

1. Vorrichtung (1) zum Sammeln und Transportieren von Solarenergie, umfassend eine um eine Längsrichtung (2) parabelförmig gebogene Spiegelfläche (3) für Solarstrahlung, die eine Fokussierung auf eine Brennlinie (4) ermöglicht, wobei im Wesentlichen im Bereich der Brennlinie (4) ein Leitungsmittel (5) angeordnet ist, durch das eine energiespeichernde Flüssigkeit (6) führbar ist, insbesondere umfassend eine Spiegelrinne um das Leitungsmittel (5), wobei die gebogene Spiegelfläche (3) zumindest teilweise, insbesondere überwiegend horizontal zur Nachfolge der Solarstrahlung um eine Drehachse (7), insbesondere um bis zu etwa 180 ° , drehbar ist, die im Wesentlichen parallel zur Brennlinie (4) verlaufend eingerichtet ist, wobei die Brennlinie (4) mit dem aufnehmenden Leitungsmittel (5) eine zumindest teilweise, insbesondere überwiegende Komponente in einer Vertikalen (8) aufweist.

2. Vorrichtung nach Anspruch 1, **dadurch gekennzeichnet, dass** die Brennlinie (4) zusammen mit der gebogenen Spiegelfläche (3) um eine im Wesentlichen horizontale Kippachse (9) zur Nachfolge der Solarstrahlung im Wesentlichen vertikal kippbar ist, wobei die vertikale Kippung der gebogenen Spiegelfläche (3) in einem Winkelbereich (10) von etwa 0° bis etwa 90° gegenüber der Vertikalen (8) vornehmbar ist.

3. Vorrichtung nach einem der Ansprüche 1 bis 2, **dadurch gekennzeichnet, dass** die gebogene Spiegelfläche (3) durch ein Haltegestell (10) zu halten ist, das an der horizontalen Kippachse (9) kippbar ist, wobei insbesondere ein Bewegungsmotor (11) zur Betätigung der Kippung vorgesehen ist und/oder ein Scherenexpansionssystem (24), insbesondere angetrieben durch den Bewegungsmotor (29) und/oder eine Führung der gebogenen Spiegelfläche (3) mittels einer/mehrerer Linearführung/en (25) entlang des Haltegestells (10), an die die Spiegelfläche (3) angelenkt ist, und/oder ein Bewegungsmotor (12) zur Drehung angeordnet, insbesondere im Bereich des Leitungsmittels (5), vorgesehen ist und/oder ein Rad (26), insbesondere ein Kettenrad, zugeordnet zu dem Spiegelfläche (3) vorgesehen ist mit einem Kettenantrieb angetrieben durch einen Bewegungsmotor (12) angeordnet in einem Haltebereich (27) des Haltegestells (10) zugeordnet zu der Spiegelfläche (3).

4. Vorrichtung nach einem der Ansprüche 1 bis 3, **dadurch gekennzeichnet, dass** entlang des Leitungsmittels (5) im Bereich der Brennlinie (4) eine Hinführungsleitung (13) und eine Rückführungsleitung (14) für die energiespeichernde Flüssigkeit (6) im Anschluss an Anschlussleitungen (23) für die energiespeichernde Flüssigkeit (6), insbesondere gekoppelt an einen Wärmespeicher, eingerichtet ist, wobei insbesondere eine Ankopplung der Hinführungsleitung (13) und Rückführungsleitung (14) an die Anschlussleitung (23) an dem Endbereich (15) der Brennlinie (4) vorgesehen ist, der benachbart zur Kippachse (9) eingerichtet ist, insbesondere an einem oberen Endbereich (19) des Haltegestells (10).

5. Vorrichtung nach einem der Ansprüche 1 bis 4, **dadurch gekennzeichnet, dass** an dem Haltegestell (10) an einem oberen Endbereich (16) und einem unteren Endbereich (17) Drehlagermittel (18) für die Drehung der gebogenen Spiegelfläche (3) relativ zu dem mittig gehaltenen Leitungsmittel (5) und der Brennlinie (4) vorgesehen sind.

6. Vorrichtung nach einem der Ansprüche 1 bis 5, **dadurch gekennzeichnet, dass** die Drehlagermittel (18) teilbar ausgebildet sind, insbesondere mit abnehmbaren Haltemitteln (20), durch der Zusammenhalt der Drehlagermittel (18) ermöglicht ist.

7. Vorrichtung nach einem der Ansprüche 1 bis 6, **dadurch gekennzeichnet, dass** die Hinführungsleitung (13) und die Rückführungsleitung (14) im Bereich der Brennlinie (4) in einer Vakuumglaseinrichtung (21), die insbesondere mit lokalen Spiegelmitteln und/oder Wärmeaufnahmeschichten ausgestattet ist.

8. Vorrichtung nach einem der Ansprüche 1 bis 7, **dadurch gekennzeichnet, dass** zur Ankopplung der Hinführungsleitung (13) und die Rückführungsleitung (14) in einer Vakuumglaseinrichtung (21) an dem oberen Endbereich (16) Flansche (22) vorgesehen sind und/oder eine bei einer wärmeleitende Trockenankopplung einer Vakuumglaseinrichtung (21) eine Steckverbindung und/oder eine Abdeckung (28) zum Schutz der Spiegelfläche (3) vorgesehen ist, insbesondere derart angeordnet, dass die Abdeckung (28) zur Sicherung in einer eingefahrenen Position der Spiegelfläche (3) gegeben.

9. Verfahren zum Sammeln und Transportieren von Solarenergie unter Verwendung einer Vorrichtung zum Sammeln und Transportieren von Solarenergie nach einem der Ansprüche 1 bis 8, wobei durch eine um eine Längsrichtung (2) parabelförmig gebogene Spiegelfläche (3) Solarstrahlung auf eine Brennlinie (4) fokussiert wird, wobei im Wesentlichen im Bereich der Brennlinie (4) ein Leitungsmittel (5) angeordnet wird, durch das eine energiespeichernde Flüssigkeit (6) geführt wird, insbesondere umfassend eine Spiegelrinne um das Leitungsmittel (5), wobei die gebogene Spiegelfläche (3) zumindest teilweise, insbesondere überwiegend horizontal zur Nachfolge der Solarstrahlung um eine Drehachse (7), insbesondere um bis zu etwa 180 ° , gedreht wird, die im Wesentlichen parallel zur Brennlinie (4) verläuft, wobei die Brennlinie (4) mit dem aufnehmenden Leitungsmittel (5) eine zumindest teilweise, insbesondere überwiegende Komponente übereinstimmend mit einer Vertikalen (8) aufweist, wobei die Brennlinie (4) zusammen mit der gebogenen Spiegelfläche (3) um eine im Wesentlichen horizontale Kippachse (9) zur Nachfolge der Solarstrahlung im Wesentlichen vertikal gekippt wird, wobei eine vertikale Kippung der gebogenen Spiegelfläche (3) in einem Winkelbereich (10) von etwa 0° bis etwa 90° gegenüber der Vertikalen (8) erfolgt.

10. Verfahren nach Anspruch 9, **dadurch gekennzeichnet, dass** zur Steuerung von Bewegungsmotoren (11, 12) für Bewegungen der gebogenen Spiegelfläche (3) insbesondere Microcomputer verwendet werden, insbesondere für eine automatische Solarnachführung, insbesondere unter Verwendung von Wetterberichten und/oder Umweltdaten, insbesondere mit einer Notsteuerung bei Unwetter, insbesondere Hagel und/oder Regen und/oder Schnee, wobei eine Herausdrehung der Spiegelfläche aus dem Wettergeschehen erfolgt, insbesondere zur Drehung der Spiegelfläche (3) aus einem Wettergeschehen heraus, insbesondere zum Erdboden hin.
